# EUROPEAN PATENT SPECIFICATION

(11) **EP 4 375 474 B1**
(45) Date of publication and mention of the grant of the patent: **08.07.2026**
(21) Application number: 23207613.3
(22) Date of filing: 03.11.2023
(51) Int. Cl.: E06B 9/13, E05F 15/40, E06B 9/68, F16P 3/14, G01V 8/20

(54) **A CONTROL UNIT, COMPUTER PROGRAM AND A METHOD PERFORMED BY SAID CONTROL UNIT FOR CONTROLLING OPENING AND CLOSING OF A ROLL DOOR**
STEUEREINHEIT, COMPUTERPROGRAMM UND VON DER STEUEREINHEIT DURCHGEFÜHRTES VERFAHREN ZUR STEUERUNG DES ÖFFNENS UND SCHLIESSENS EINER ROLLTÜR
UNITÉ DE COMMANDE, PROGRAMME D'ORDINATEUR ET PROCÉDÉ MIS EN UVRE PAR L'UNITÉ DE COMMANDE POUR COMMANDER L'OUVERTURE ET LA FERMETURE D'UNE PORTE ROULANTE

(30) Priority: 16.11.2022 SE 2251342
(43) Date of publication of application: 29.05.2024
(73) Proprietor: Nordic Door AB, 300 04 Halmstad (SE)
(72) Inventor: HÅKANSSON, Ulf, 305 94 Halmstad (SE); FREDRIKSSON, Jonas, 313 50 Åled (SE)
(74) Representative: Bergenstråhle & Partners AB

(56) References cited:
- EP-A1- 0 784 146
- SE-B- 467 885

## Description

### Technical field

The present invention relates generally to a control unit, computer program and a method performed by said control unit for controlling opening and closing of a roll door using a roll door control system comprising the control unit.

### Background art

A roller shutter is a type of door or window shutter comprising a plurality of horizontal slats or bars hinged together. The roller shutter may also be called security shutter, coiling door, roll door or roller door. In the following, it will be called roll door. The roll door is normally raised to open it and lowered to close it. On large roll doors, the action may be motorized. It provides protection against wind, rain, fire and theft. In shutter form, it is used in front of a window and protects the window from e.g. vandalism an burglary attempts.

High speed roll doors are an evolution of the traditional roll door. They are primarily designed to give higher operating speeds, improved sealing and sustain a higher number of opening and closing cycles than traditional roll doors, without compromising reliability and durability. To achieve this, they may have a strengthened drivetrain, strong but lightweight curtain of e.g. polyvinyl chloride (PVC), possibly with a vision window for visibility, and a high-speed industrial motor. Usually, they will roll up vertically though there are specialist bi-parting horizontally opening variations available.

Roll doors have been used worldwide for several decades in many applications, such as warehouses, cold stores, clean rooms, as part of a machine-guarding system etc. In applications where people or industrial trucks need to pass the door frequently, high speed roll doors are an excellent option, since they open and close quickly, they are durable and easy to maintain and repair after a collision.

European patent 3306026 and published European patent application 3951125 of the present applicant each show examples of such roll doors.

Roll doors that are automatic, i.e., motor driven, need to be controlled in order to be opened and closed. Especially, it is important that the opening and closing of the roll door is safe for persons being in the vicinity of the door. Also, users/buyers of roll doors demand a higher security class today than a couple of years ago. In other words, it has become even more important that the opening and closing functions of a roll door is fool proof. Consequently, there is a need for a method for controlling a roll door and a corresponding control system that are safe. There are other technical fields which also use motor driven opening and closing arrangements which need to be controlled in a safe manner, for example within the field of roller blinds for protection against sun. One such solution is presented in EP 0 784 146 A1, which discloses an installation including an electric motor for raising and lowering a roller blind. A control device includes a processing unit which operates by detection of the excess torque on the motor, or by detection of the loss of angular speed on the motor drive shaft. The control system also includes a bi-directional counter and a memory holding the values corresponding to the arrival of the blinds at the top of its range, and at its bottom stop. Comparison of speed and state of the counter allows identification of the top and bottom stop regions. This allows distinction between the arrival of the blinds at one of prescribed stop positions, and the presence of an obstacle restricting movement of the blinds.

SE467885 B discloses an example of method for controlling opening and closing of a roll door.

### Summary of invention

It is an object of the invention to address at least some of the problems and issues outlined above. It is an object of embodiments of the invention to control opening and closing of a roll door in a safe way. It is another object of embodiments to control opening and closing of a roll door with a higher safety or security class than existing methods and control systems. It is possible to achieve any of these objects and others by using methods and control units as defined in the attached independent claims.

According to a first aspect, a method is provided that is performed by a control unit for controlling opening and closing of a roll door with a roll door control system. The roll door control system comprises the control unit, an inverter communicatively connected to the control unit, a drive unit arranged at the roll door for driving the roll door for opening or closing, the drive unit being connected to the inverter, an encoder for monitoring a position of the roll door, the encoder being communicatively connected to the control unit. The inverter is arranged for controlling the drive unit based on instructions received from the control unit. The method comprises, based on a command to open or close the roll door, sending a first instruction to the inverter, the first instruction indicating speed and direction in which the drive unit is to be driven. The method further comprises obtaining, from the inverter, information related to a first speed and first direction of the drive unit; determining, from the information related to the first speed and first direction, whether the first speed and first direction match the speed and direction of the first instruction, and, when any of the first speed and first direction does not match any of the speed and direction of the first instruction, sending a second instruction to the inverter to stop the driving of the drive unit. The method further comprises obtaining, from the encoder and repeatedly over time, information on a position of the roll door, determining a second speed and second direction of the drive unit based on the information on the position of the roll door received repeatedly over time, determining whether the second speed and second direction match the speed and direction of the first instruction, and, when any of the second speed and second direction does not match any of the speed and direction of the first instruction, sending the second instruction to the inverter to stop the driving of the drive unit.

By obtaining, from the inverter, both information related to a speed of the drive unit and information related to a direction of the drive unit, the control unit can quickly stop the movement of the roll door as soon as it detects a difference between the speed information of the inverter and the instructed speed, but it can also quickly stop the movement of the roll door as soon as it detects that the roll door moves in the wrong direction compared to the instructed direction. Hereby an opening and closing of a roll door is achieved that has a higher safety or security class than existing methods and control systems. Further, by also determining speed and direction of the roll door based on information on positions of the roll door received from the encoder, a second way of determining actual speed and direction is achieved. Also here, the control unit can quickly stop the movement of the roll door when it detects a difference between the determined speed and the instructed speed or a difference between the determined direction and the instructed direction. Consequently, a two-way method is achieved for determining actual speed and direction of the roll door, and it is possible to stop the opening and closing of the roll door in case a difference is detected between any of the two determinations of speed and the instructed speed and between any of the two determinations of direction and the instructed direction. Hereby, an opening and closing of a roll door is achieved that has an even higher safety or security class. Also, observe that the determined speed and direction obtained from information from the encoder is independent from the determined speed and direction obtained from information from the inverter, as the inverter and encoder are two independent units of the roll door control system.

According to an embodiment, the system further comprises a detection unit arranged at the roll door for detecting an object in an opening of the roll door, the detection unit being communicatively connected with the control unit. The method further comprises, when the detection unit detects that an object is in the opening of the roll door, and the command was to close the roll door, receiving, from the detection unit, information that an object is detected in the opening of the roll door. The method further comprises, in response to the received information that an object is detected in the opening of the roll door, sending the second instruction to the inverter to stop the driving of the drive unit. Hereby, the control unit can stop the driving of the drive unit when an object is detected in the opening of the roll door, in addition to the two-way detection of speed and direction of drive unit.

According to an embodiment, the communicative connection between the detection unit and the control unit comprises a first dedicated cable. Further, the receiving of the information from the detection unit that an object is detected in the opening of the roll door comprises receiving the information over the first dedicated cable. By sending such information over a dedicated cable instead of over for example a network or wirelessly, achieves a higher security, i.e., a more secure handling when an object is detected in the opening during for example closing of the roll door.

According to another embodiment, the method further comprises, after the receiving of information from the detection unit that an object is detected in the opening of the roll door and after the sending of the second instruction to the inverter to stop the driving of the drive unit, sending an instruction to the inverter to open the roll door. Hereby it is ensured that in case any object is stuck in the opening by the roll door after the roll door has been stopped, the roll door is automatically opened again and the object is not stuck anymore in the opening.

According to another embodiment, the method further comprises, when the command is to close the roll door, and in response to the command to close the roll door, obtaining function information from the detection unit revealing whether the detection unit is functioning correctly. Further, the first instruction to the inverter, indicating speed and direction in which the inverter is to drive the drive unit, is only sent when the obtained function information revealed that the detection unit is functioning correctly. Hereby, it is avoided that the roll door is beginning to close when the detection unit is not functioning correctly, which results in a more secure function of the roll door.

According to yet another embodiment, the method further comprises issuing an alarm in response to the receiving of information that an object is detected in the opening of the roll door.

According to yet another embodiment, the communicative connection between the control unit and the inverter comprises a second dedicated cable. Further, the sending of the second instruction to the inverter to stop the driving of the drive unit further comprises sending the second instruction over the second dedicated cable. The use of a dedicated cable for sending the instruction to the inverter to stop the driving of the drive unit ensure a safer communication of the stop signal than when using for example wireless communication.

According to another embodiment, the method further comprises determining, based on the obtained information on the position of the roll door, that the roll door has reached an end position, and sending an instruction to the inverter to stop the driving of the drive unit in response to the determining that the roll door has reach an end position.

According to another embodiment, the method further comprises, after the sending of the instruction to the inverter to stop the driving of the drive unit in response to the determining that the roll door has reach an end position, continue obtaining information on the position of the roll door from the encoder. Then when the continued obtained information on the position of the roll door reveals that the roll door is still moving, sending the second instruction to stop the driving of the drive unit. Hereby, any incidents occurring due to the roll door moving after reaching the end position is avoided.

According to yet another embodiment, the inverter is communicatively connected to the control unit via a first communication link and the encoder is communicatively connected to the control unit via a second communication link. Further, the sending of the first instruction to the inverter comprises sending the first instruction over the first communication link using a digital communications protocol, the obtaining of the information related to the first speed and first direction of the drive unit from the inverter comprises obtaining the information over the first communication link using the digital communications protocol and/or the obtaining of the information related to a position of the roll door from the encoder comprises obtaining the information over the second communication link using the digital communication protocol.

According to yet another embodiment, the method further comprises repeatedly triggering sending of test messages on the digital communication protocol between the control unit and the encoder over the first communication link and/or between the control unit and the inverter over the second communication link. Further, when obtaining information that any of the test messages was not received over the first or second communication link, sending the second instruction to the inverter to stop the driving of the drive unit. Hereby, the first and/or second communication links are repeatedly tested for whether they are working correctly or not, which results in a more secure method. In the embodiment of having a second dedicated cable, the second instruction is sent over the second dedicated cable.

According to still another embodiment, the method further comprises issuing an alarm in response to the determining that any of the first speed and first direction does not match any of the speed and direction of the first instruction or in response to the determining that any of the second speed and second direction does not match any of the speed and direction of the first instruction.

According to a second aspect, a control unit of a roll door control system is provided. The control unit is arranged for controlling opening and closing of a roll door. The roll door control system further comprises an inverter to be communicatively connected to the control unit, a drive unit for driving the roll door to be opened or closed, the drive unit to be connected to the inverter, and an encoder for monitoring a position of the roll door, the encoder to be communicatively connected to the control unit. Further, the inverter is arranged for controlling the drive unit based on instructions received from the control unit. The control unit comprises processing circuitry and a memory. The memory contains instructions executable by said processing circuitry, whereby the control unit is operative for, based on a command to open or close the roll door, sending a first instruction to the inverter, the first instruction indicating speed and direction in which the drive unit is to be driven. The control unit is further operative for obtaining, from the inverter, information related to a first speed and first direction of the drive unit, determining, from the information related to the first speed and first direction, whether the first speed and first direction match the speed and direction of the first instruction, and, when any of the first speed and first direction does not match any of the speed and direction of the first instruction, sending a second instruction to the inverter to stop the driving of the drive unit. The control unit is further operative for obtaining, from the encoder and repeatedly over time, information on a position of the roll door, determining a second speed and second direction of the drive unit based on the information on the position of the roll door received repeatedly over time, determining whether the second speed and second direction match the speed and direction of the first instruction, and, when any of the second speed and second direction does not match any of the speed and direction of the first instruction, sending the second instruction to the inverter to stop the driving of the drive unit.

According to an embodiment, roll door control system further comprises a detection unit for arrangement at the roll door for detecting an object in an opening of the roll door, the detection unit to be communicatively connected to the control unit. Further, the control unit is further operative for, when the detection unit detects that an object is in the opening of the roll door, and the command was to close the roll door, receiving, from the detection unit, information that an object is detected in the opening of the roll door, and in response to the received information, sending the second instruction to the inverter to stop the driving of the drive unit.

According to embodiments, the control unit is further operative for performing any of the embodiments of the first aspect described above.

According to other aspects, a computer program is also provided, the details of which will be described in the claims and the detailed description.

Further possible features and benefits of this solution will become apparent from the detailed description below.

### Brief description of drawings

The solution will now be described in more detail by means of exemplary embodiments and with reference to the accompanying drawings, in which:
Fig. 1 is a perspective view of a roll door in which the present invention may be used. This exemplary roll door is arranged in an opening in a fence arranged as a protection for example around a machine or robot cell.
Fig. 2 is a schematic block diagram of a roll door control system according to an embodiment.
Fig. 3 is a flow chart of a method according to an embodiment of the invention.
Fig. 4 is another flowchart of an embodiment.
Fig. 5 is a schematic block diagram illustrating a control unit in more detail, according to a further possible embodiment.

### Description of embodiments

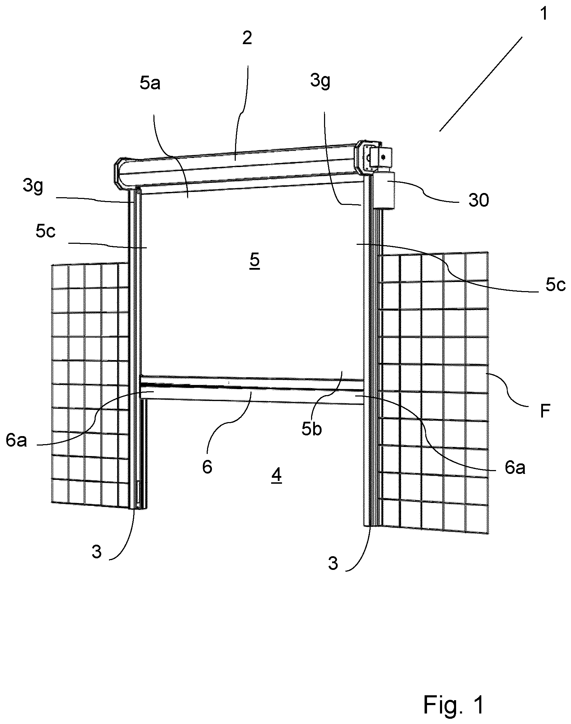

Fig. 1 shows an example of a roll door 1 with which the present invention may be used. The roll door 1 of fig. 1 is here arranged in an opening 4 in a fence F, which for example may be arranged as protection around a machine or robot cell. Other applications are of course applicable to the roll door 1. The roll door 1 comprises a roll 2 which is arranged between upper ends 3g of two frame profiles 3, which are arranged on opposite sides of the opening 4. The roll 2 is in the example of fig. 1 surrounded by a housing. The two frame profiles 3 and the roll 2 together surround the opening 4. The roll door 1 further comprises a flexible door leaf 5 which comprises a first end 5a (upper end), an opposite second end 5b (lower end) and two long sides 5c opposite each other, wherein the first end 5a of the flexible door leaf 5 is secured to the roll 2. The roll door 1 is arranged so that the flexible door leaf 5 can be rolled up onto the roll 2 or rolled down from the roll, by means of a drive unit 30, i.e. a motor. The roll door 1 may further comprise a gear and/or a coupling for connection between the motor 30 and the roll 2, in order to transfer force generated by the motor into rotation of the roll 2. A beam 6 is secured to the second end 5b of the flexible door leaf 5 and outer ends 6a of the beam 6 as well as the long sides 5c of the flexible door leaf 5 are accommodated in guiding grooves 3a of the frame profiles 3. The door leaf 5 as well as the beam 6 are movable along the frame profiles 3 in their longitudinal direction, i.e. normally vertically upwards and downwards when the drive unit 30 winds up or rolls down the flexible door leaf 5 on the roll operator 2.

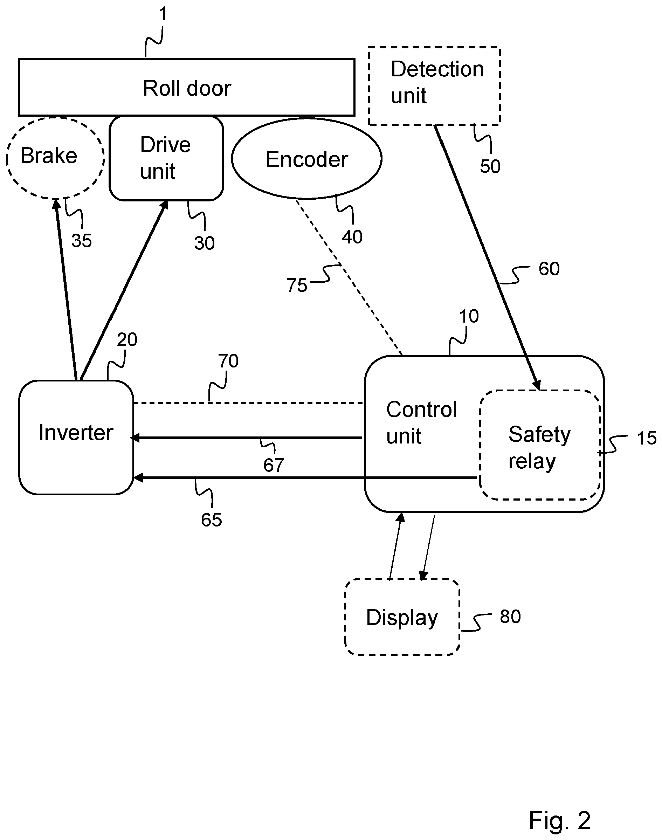

Fig. 2 shows a roll door control system for opening and closing of a roll door 1, which roll door 1 is shown very schematically in fig. 2, and which roll door 1 for example may be the roll door 1 shown in more detail in fig. 1. The roll door control system comprises a control unit 10 arranged to control the opening and closing of the roll door 1 to be performed by the roll door control system. The control unit 10 may be a Programmable Logic Controller (PLC). The roll door control system further comprises an inverter 20 communicatively connected to the control unit 10, and a drive unit 30 arranged at the roll door 1 for driving the roll door for opening or closing. The drive unit 30 may be the drive unit of fig. 1. The drive unit 30 is further electrically connected to the inverter 20. The electrical connection may be a regular electrical cable. The inverter 20 is arranged for controlling the drive unit 30 based on instructions received from the control unit 10. The inverter 20 is arranged for providing an electrical current and frequency to the drive unit 30 according to the instructions received from the control unit 10. The instructions from the control unit 10 indicates speed and direction in which the drive unit 30 is to be driven, in accordance with a received command. The command may be for example to open the roll door or to close the roll door. The roll door control system may further have a display 80 with input means, such as a touchpad or a keyboard at which an operator can input the commands. The display 80 is communicatively connected to the control unit 10, for example via Ethernet.

As mentioned, the control unit 10 is arranged for providing the inverter 20 with instructions indicating a speed and direction in which the drive unit 30 is to be driven. The control unit 10 may determine or obtain the electrical current and frequency that the inverter is to provide the drive unit 30 with in order to drive the drive unit with the requested speed and direction. In this case, the instruction indicating speed and direction comprises the current and frequency that the inverter is to use for driving the drive unit. In an alternative, the inverter is arranged to receive in the instruction indicating speed and direction, the actual speed and direction and to convert the speed and direction of the instruction into the electrical current and frequency that the inverter 20 is to provide to the drive unit 30. The inverter 20 is further arranged to transform its input power into the electrical current and frequency that it provides to the drive unit 30. The drive unit 10 is arranged to drive the roll door 1 with the current and frequency in order to move the roll door up or down, e.g., the door leaf 5 of fig. 1 up or down with the speed indicated in the instruction. The inverter 20 is further arranged to monitor the electrical current and frequency used by the drive unit for driving the roll door. The inverter 20 may further be arranged for monitoring the power consumption of the drive unit 30.

The roll door control system further comprises an encoder 40 for monitoring a position of the roll door. The encoder 40 is communicatively connected to the control unit 10. The encoder 40 may monitor the position of the roll door by monitoring a position of the drive unit 30. For example, the encoder 40 may register when a certain position of the motor shaft passes the encoder. In other words, the encoder 40 may count the turns that the motor shaft makes. The encoder 40 is arranged for sending information to the control unit 10 of the monitored position. For example, the encoder 40 sends a pulse to the control unit for every turn the motor shaft makes. There may be a gearing between the drive unit 30 and the movement of the roll door 1, which the control unit 10 in such a case would be aware of. The encoder 40 may be an absolute encoder that does not lose its position when power is cut off. The drive unit 30 may for example be a three-phase AC motor. The drive unit may be equipped with an integrated brake 35. The brake 35 is mainly used as a parking brake but may also be used as an emergency brake, for example when an object is detected in the opening of the roll door 1. The drive unit 30 may further comprise a gear in which the encoder 40 may be integrated.

The roll door control system further comprises a detection unit 50 arranged at the roll door 1 for detecting an object in an opening of the roll door. The detection unit 50 may only be activated when the roll door 1 is to be closed, or is being closed. Referring to the example of roll door 1 shown in fig. 1, the opening is number 4 of fig. 1. According to one embodiment, the detection unit 50 is a photocell arrangement such as a photocell curtain that may be integrated in e.g. the frame profile 3 of the door of fig. 1 In case light sent from a sending unit of the photocell curtain arranged at one side of the opening is obstructed from reaching a receiving unit arranged at an opposite side of the opening, the photocell curtain detects that there is an object in the opening.

According to another embodiment, the detection unit 50 is a pinch protection device arranged at the beam 6 of the roll door of fig. 1 in order to detect whether the door bumps into any object when the roll door is being closed. When the beam bumps into an object, the beam, or a strip of the beam, is pressed together and the pinch protection device reacts and detects that there is an object in the opening. The pinch protection device may be arranged as an optical edge, which may be a photocell arrangement arranged in the strip of the beam, with an optical sender and an optical receiver arranged at two opposite ends of the beam so that when the strip is pressed together, light from the sender is obstructed from reaching the receiver.

The detection unit 50 is communicatively connected to the control unit 10 so that it can report to the control unit 10 that an object has been detected in the opening of the door 1.

According to an embodiment, the communicative connection between the detection unit 50 and the control unit 10 is a first dedicated cable 60. Also, the communicative connection between the control unit 10 and the inverter 20 may comprise a second dedicated cable 65. The communication over the first and second dedicated cables 60, 65 does not comprise any intelligence, i.e. there is a hard-wired connection. According to an embodiment, voltage is applied by the detection unit 50 on the first dedicated cable as long as the sending unit/sender and receiving unit/receiver of the photocell curtain/arrangement are in light contact. In case the light contact between the sending unit/sender and receiving unit/receiver of the photocell curtain/arrangement is broken, the voltage on the first dedicated cable 60 is set to zero and consequently the other end of the first dedicated cable 60, i.e. at the control unit 10, is set to zero, which indicates a detected object. According to an alternative, a detected object can be indicated as a voltage set on the first dedicated cable, which the normally has zero voltage. Further, when the control unit 10 is informed over the first dedicated cable that there is an object detected in the opening 4, voltage will be changed on the second dedicated cable 65 indicating to the inverter to stop the drive unit 30. Such a hard-wired connection, or connection via a dedicated cable provides a safer or more reliable communication than if the communication would have been over a network or if wireless communication would have been used.

Fig. 2 also shows a safety relay 15 as a part of the control unit 10. The safety relay 15 is used in one embodiment. According to this embodiment, the first dedicated cable 60 is connected to a first side of the safety relay 15 and the second dedicated cable 65 is connected to a second side of the safety relay 15 opposite the first side so that a change of signal on the first side is propelled into a change of signal on the second side. A safety relay 15 provides additional safety when it comes to relaying electrical contact. For example, it is more secure than relay circuits of a regular PLC. The safety relay 15 may be an add-on to an existing control unit or PLC, for example it may be plugged into the PLC. A typical design of a safety relay is based on the classic three-contact combination, which redundant design ensures that wiring errors do not lead to loss of the safety function. The safety relay 15 has two relays connected in parallel with positive-guided contacts. Two input circuits each activate one of the two relays.

According to an embodiment, the inverter 20 may be communicatively connected to the control unit 10 via a first communication link 70. Over this first communication link 70, the instruction from the control unit indicating direction and speed for driving the driving unit 30 may be sent. The communication over the first communication link 70 is sent using a digital communication protocol. The digital communication protocol may be Controller Area Network open (CANopen). Also, information indicating a speed and direction of the drive unit 30, which information has been monitored by the inverter 20 may be sent over the first communication link 70 using the digital communication protocol. The information indicating speed and direction sent by the inverter 20 over the first communication link 70 may be the actual speed and direction of the drive unit, or it may be electrical current and frequency used by the drive unit 30, which the control unit 10 then uses to calculate speed and direction of the drive unit 30. Further, the encoder 40 may be communicatively connected to the control unit 10 via a second communication link 75. The communication over the second communication link 75 is sent using the digital communication protocol. Over this second communication link 75, the encoder 40 is arranged to send information to the control unit 10 indicating the position of the roll door 1. The first and second communication link 70, 75 may be realized as a cable, as a network or as a wireless connection.

According to an advantageous embodiment, both the first and second communication links 70, 75 as well as the first and second dedicated cables 60, 65 are implemented. The cables 60, 65 and links 70, 75 may be used so that information on regular control of opening and closing of the roll door is sent over the first and second communication links 70, 75 using the digital communication protocol whereas communication regarding faults in the system are sent over the dedicated cables 60, 65. Hereby, the control of opening and closing of the roll door becomes even safer.

According to an embodiment, there may be an additional dedicated cable 67 connecting the control unit 10 with the inverter 20. Over this additional dedicated cable 67, the control unit 10 may inform the inverter 20 to open the roll door after the drive unit 30 has been stopped due to the detection unit 50 detecting an object in the opening of the roll door 1.

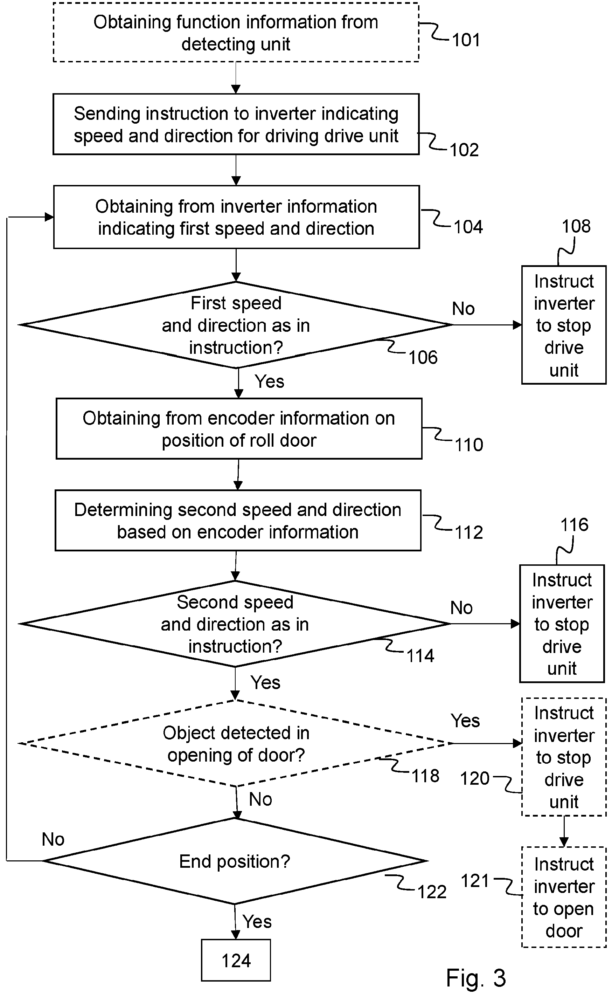

Fig. 3 describes a method performed by the control unit 10 for controlling opening and closing of a roll door 1 with the roll door control system according to any of the embodiments shown in fig. 2. When the control unit 10 gets a command to open or close the roll door 1, the control unit sends 102 a first instruction to the inverter 20, the first instruction indicating speed and direction in which the inverter 20 is to drive the drive unit 30. The command to open or close the roll door may be received from the display 80 where e.g. an operator has put in the command. The inverter 20 then controls the drive unit 30 according to the received first instruction. The inverter 20 further monitors information related to the speed and direction in which the drive unit 30 works for driving the roll door 1, here called "first speed" and "first direction". The information related to the first speed and first direction may be the current, frequency and possibly also power that the drive unit 30 uses. The inverter 20 then sends information related to the first speed and first direction to the control unit 10, i.e., the control unit 10 obtains 104, from the inverter 20, information related to the first speed and first direction of the drive unit 30. Thereafter, the control unit 10 determines 106 whether the first speed and first direction match the speed and direction of the first instruction that was sent by the control unit 10 to the inverter 20. When any of the first speed and first direction does not match any of the speed and direction of the first instruction, the control unit 10 sends 108 a second instruction to the inverter 20, the second instruction being an instruction to stop the driving of the drive unit 30. The instruction to stop the driving of the drive unit may comprise an instruction to set the speed to zero. When the first speed and first direction match the speed and direction of the first instruction, the control of the drive unit and thereby the roll door works well and the process of closing or opening the door can carry on.

Further, the control unit 10 obtains 110, from the encoder 40 and repeatedly over time, information on a position of the roll door 1. As mentioned earlier, the encoder 40 may monitor the position of the roll door by monitoring a position of the drive unit 30. Thereafter, the control unit 10 determines 112 a second speed and second direction of the drive unit 30 based on the information on the position of the roll door received repeatedly over time. The control unit 10 further determines 114 whether the second speed and second direction match the speed and direction of the instruction sent 102 to the inverter 20. When any of the second speed and second direction does not match any of the speed and direction of the instruction, the control unit 10 sends 116 the second instruction to the inverter 20 to stop the driving of the drive unit 30. When the second speed and second direction match the speed and direction of the first instruction, the control of the drive unit and thereby the roll door works well and the process of closing or opening the door can carry on.

Further, still referring to fig. 3, when the command was to close the roll door 1, the detection unit 50 continuously or at least repeatedly during the process of closing the roll door detects whether there is any object in the opening of the roll door. When the detection unit 50 detects that an object is in the opening of the roll door, the detection unit 50 sends to the control unit 10, and, consequently, the control unit receives 118 from the detection unit 50, information that an object is detected in the opening of the roll door. When the control unit 10 receives such information, the control unit sends 120 the second instruction to the inverter 20 to stop the driving of the drive unit 30.

By such a method, the process of closing and opening the roll door is quite safe, as the speed and direction of the drive unit is supervised as well as the position of the roll door. Also, observe that speed and direction of the drive unit is supervised by a first unit, i.e. the inverter, and the position of the roll door is supervised by a second unit, i.e. the encoder, and in addition the encoder and inverter are independent from each other. If any of the above does not match the first instruction, the drive unit is stopped, and thereby also the roll door. Also, when closing the roll door, it is supervised whether there is any object in the opening of the roll door.

According to an embodiment shown in fig. 3, the method further comprises determining 122, based on the obtained 110 information on the position of the roll door 1, whether the roll door 1 has reached an end position, which will be an open end position in case the roll port is to be opened and a closed end position in case the roll door is to be closed. The steps 104-122 are repeated during the process of closing or opening the door until the roll door has reached any of its end positions, or until the inverter has stopped the drive unit. Preferably, the encoder 40 only sends its monitored position information, and it is the control unit 10 that knows that a certain position information from the encoder means that the roll door has reached any of its end positions.

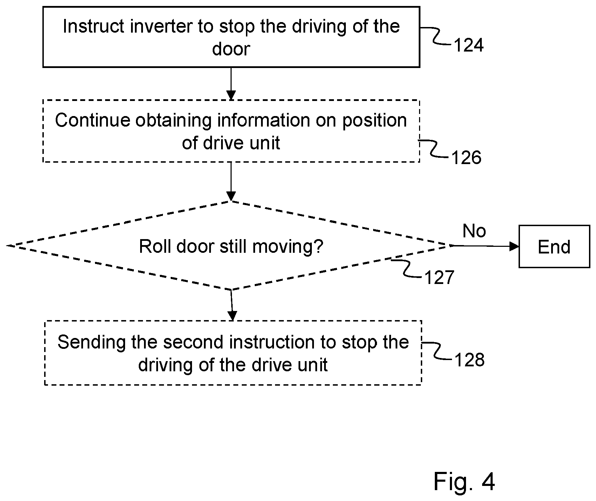

According to another embodiment, which is shown in fig. 3 and the first box of fig. 4, when the control unit 10 has detected that the roll door 1 has reached any of its end positions, an instruction is sent 124 to the inverter 20 to stop the driving of the drive unit 30. The instruction may be sent 124 over the first communication link 70 using the digital communication protocol.

According to another embodiment shown in fig. 3, when the command is to close the roll door 1, and before starting to close the roll door, the control unit 10 obtains 101 function information from the detection unit 50 revealing whether the detection unit 50 is functioning correctly or not. Then the first instruction to the inverter 20 is only sent 102 when the obtained 101 function information revealed that the detection unit 50 is functioning correctly. Hereby, it is ensured that the roll door 1 will only be closed, i.e. driven to the closed position, when the detection unit 50 works as it should. The detection unit 50 may do the function check itself. The detection unit 50 may send the function information over the first dedicated cable 60. The function information may be a change of voltage on the first dedicated cable which the control unit 10 understands means something is wrong with the detection unit 50. In case the control unit 10 gets such information, it will not send any instruction to the inverter 20 to start closing the door. Instead, the control unit 10 may issue an alarm that may be displayed on the display 80, informing of the fault signal from the detection unit 50. According to an embodiment, the first dedicated cable 60 may be tested every now and then, by the detection unit 50 or the control unit 10 sending a signal over the first dedicated cable 60 and the other of the two units 10/50 checking whether the signal arrives.

In case of failure on the detection unit 50 or the first dedicated cable 60, the roll door can still be closed in dead-man mode at a very low speed. This may be achieved by an operator pressing a certain button electrically connected to the control unit 10. The control unit 10 reacts on such pressing of the certain button by sending an instruction to the inverter indicating to close the door with the very low speed. If the button is stopped being pressed, the control unit will stop the door immediately, which is the dead-man part of the dead-man mode. According to an embodiment, to make sure that the PLC cannot enter dead-man mode accidently, the operator must first confirm on the display that dead-man mode is requested and then, as mentioned, keep the button pressed while the door is closing.

According to another embodiment also shown in fig. 3, the method further comprises sending 121 an instruction to the inverter 20 to open the roll door, after the control unit 10 has sent 120 the second instruction to the inverter 20 to stop the driving of the drive unit 30 because the detection unit 50 detected an object in the opening of the roll door. The instruction to open the roll door may be sent over the separate additional dedicated cable 67, or it may be sent over the first communication link 70 using the digital communication protocol. The instruction to the inverter 20 to open the roll door comprises a certain speed which the inverter 20 is to use when controlling the drive unit 30, and of course a direction that means "open".

According to another embodiment, which is shown in fig. 4, the control unit 10 will continue obtaining 126 information on the position of the roll door from the encoder 40 also after the control unit has sent 124 the instruction to the inverter 20 to stop the driving of the drive unit 30 in response to the determining that the roll door 1 has reach an end position. When the control unit 10 determines 127 from this obtained 126 information that the roll door is still moving, the control unit sends 128 the second instruction to the inverter 20 to stop the driving of the drive unit 30. Hereby, it is assured that the roll door will not be driven past its end positions in case anything goes wrong with the normal operation. Hereby, the safety level of the control method is raised even more. The second instruction is sent over the second dedicated cable 65.

According to yet another embodiment, the control unit repeatedly triggers test messages to be sent on the digital communication protocol between the control unit 10 and the encoder 40 over the first communication link 70 and/or between the control unit 10 and the inverter 20 over the second communication link 75. When the control unit 10 obtains information that any of the test messages was not received over the first or second communication link 70, 75, the control unit sends the second instruction to the inverter 20 over the second dedicated cable 65 to stop the driving of the drive unit 30. Hereby, it is repeatedly tested that the communication links and the digital communication protocol used over the communication links are functioning correctly, and if not, the roll door is stopped. Consequently, an even higher level of safety is achieved for the control method. The test messages may be sent by the control unit to the inverter 20 and to the encoder 40, and the inverter 20 and the encoder 40 then reports back to the control unit 10 whether they received the test messages. Alternatively, or together with the above test messages, the control unit 10 may instruct the inverter 20 and the encoder 40 to send test messages to the control unit 10 and then the control unit 10 detects whether it received the test messages.

The control unit 10 may also issue an alarm in response to determining 106 that any of the first speed and first direction does not match any of the speed and direction of the first instruction or in response to determining 114 that any of the second speed and second direction does not match any of the speed and direction of the first instruction, or in response to receiving 118 of information that an object is detected in the opening of the roll door 1. The alarm can be shown on the display 80. It is also possible that a light and/or sound alarm is triggered.

In case the control unit 10 is connected to a client control system such as a system for control of a machine such as a robot inside a fence where the roll door is arranged in an opening of the fence, such as in fig. 1, information on deviations from normal use of the roll door can be sent to the client control system, which can decide to stop the movement of the machine. The information on deviations may be that an object has been detected in the opening of the roll door, that the roll door has been stopped for any emergency reason, etc.

The inverter has Safe Torque Off (STO) function, so in case of an emergency stop being activated, both the power to the drive unit and the control voltage to the inverter are cut off.

In case the information on position of the roll door 1 obtained from the encoder 40 indicates that the roll door starts to move downwards uncontrolled, the control unit 10 can send instructions to the inverter 20 to close the roll door with a very slow speed. At the same time an alarm can be activated, which preferably has to be reset manually e.g. on the display after investigating/repairing the problem.

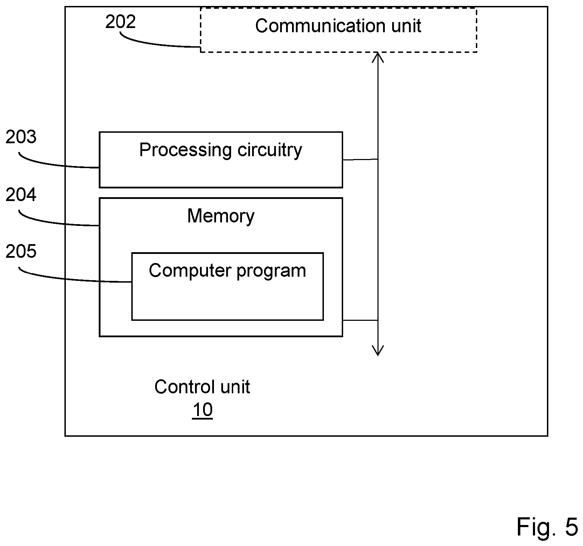

Fig. 5 shows the control unit 10 of fig. 2 in more detail. The control unit 10 comprises processing circuitry 203. The control unit 10 further comprises a memory 204. The memory 204 contains instructions executable by the processing circuitry 203, whereby the control unit 10 is operative for performing any of the embodiments of the method for controlling opening and closing of a roll door 1 with a roll door control system, the embodiments of the method being described in this disclosure.

According to other embodiments, the network node 130 may further comprise a communication unit 202, which may be considered to comprise conventional means for communication with the other units of the roll door control system, i.e. the encoder, 40, the detection unit 50, the inverter 20 and the display 80. The instructions executable by the processing circuitry 203 may be arranged as a computer program 205 stored in said memory 204. The processing circuitry 203 may comprise one or more programmable processor, application-specific integrated circuits, field programmable gate arrays or combinations of these adapted to execute instructions.

The computer program 205 may be arranged such that when its instructions are run in the processing circuitry, they cause the control unit 10 to perform the steps described in any of the described embodiments of the method for controlling opening and closing of a roll door 1. The computer program 205 may be carried by a computer program product connectable to the processing circuitry 203. The computer program product may be the memory 204, or at least arranged in the memory. The memory 204 may be realized as for example a Random-access memory (RAM), Read-Only Memory (ROM) or an Electrical Erasable Programmable ROM (EEPROM).

## Claims

1. A method performed by a control unit (10) for controlling opening and closing of a roll door (1) with a roll door control system comprising:
the control unit (10);
an inverter (20) communicatively connected to the control unit (10),
a drive unit (30) arranged at the roll door (1) for driving the roll door (1) for opening or closing, the drive unit (30) being connected to the inverter (20),
an encoder (40) for monitoring a position of the roll door (1), the encoder (40) being communicatively connected to the control unit (10),
wherein the inverter (20) is arranged for controlling the drive unit (30) based on instructions received from the control unit (10),
the method comprising:
based on a command to open or close the roll door (1), sending (102) a first instruction to the inverter (20), the first instruction indicating speed and direction in which the drive unit (30) is to be driven;
obtaining (104), from the inverter (20), information related to a first speed and first direction of the drive unit (30);
determining (106), from the information related to the first speed and first direction, whether the first speed and first direction match the speed and direction of the first instruction,
obtaining (110), from the encoder (40) and repeatedly over time, information related to a position of the roll door (1),
determining (112) a second speed and second direction of the drive unit (30) based on the information related to the position of the roll door (1) received repeatedly over time,
determining (114) whether the second speed and second direction match the speed and direction of the first instruction, and
when any of the first speed and second speed does not match the speed of the first instruction or when any of the first direction and second direction does not match the direction of the first instruction, sending (108, 116) a second instruction to the inverter (20) to stop the driving of the drive unit (30).

2. Method according to claim 1, wherein the system further comprises a detection unit (50) arranged at the roll door (1) for detecting an object in an opening (4) of the roll door (1), the detection unit being communicatively connected with the control unit (10), the method further comprises:
when the detection unit (50) detects that an object is in the opening (4) of the roll door (1), and the command was to close the roll door (1), receiving (118), from the detection unit (50), information that an object is detected in the opening (4) of the roll door (1), and
in response to the received information that an object is detected in the opening (4) of the roll door (1), sending (120) the second instruction to the inverter (20) to stop the driving of the drive unit (30).

3. Method according to claim 2, wherein the communicative connection between the detection unit (50) and the control unit (10) comprises a first dedicated cable (60), and wherein the receiving (118) of the information from the detection unit (50) that an object is detected in the opening (4) of the roll door (1) further comprises receiving the information over the first dedicated cable (60).

4. Method according to claim 2 or 3, further comprising, after the receiving (118) of information from the detection unit (50) that an object is detected in the opening (4) of the roll door (1) and after the sending (120) of the second instruction to the inverter (20) to stop the driving of the drive unit (30), sending (121) an instruction to the inverter (20) to open the roll door (1).

5. Method according to any claims 2-4, further comprising, when the command is to close the roll door (1), and in response to the command to close the roll door (1), obtaining (101) function information from the detection unit (50) revealing whether the detection unit (50) is functioning correctly, and wherein the first instruction to the inverter (20) indicating speed and direction in which the inverter (20) is to drive the drive unit (30) is only sent (102) when the obtained (101) function information revealed that the detection unit (50) is functioning correctly.

6. Method according to any of claims 2-5, further comprising issuing an alarm in response to the receiving (118) of information that an object is detected in the opening (4) of the roll door (1).

7. Method according to any of the preceding claims, wherein the communicative connection between the control unit (10) and the inverter (20) comprises a second dedicated cable (65), and wherein the sending (108, 116, 120) of the second instruction to the inverter (20) to stop the driving of the drive unit (30) further comprises sending the second instruction over the second dedicated cable (65).

8. Method according to any of the preceding claims, further comprising:
determining (122), based on the obtained (110) information on the position of the roll door (1), that the roll door (1) has reached an end position, and
sending (124) an instruction to the inverter (20) to stop the driving of the drive unit (30) in response to the determining that the roll door (1) has reach an end position.

9. Method according to claim 8, further comprising, after the sending (124) of the instruction to the inverter (20) to stop the driving of the drive unit (30) in response to the determining that the roll door (1) has reach an end position, continue obtaining (126) information on the position of the roll door (1) from the encoder (40), and when the continued obtained information on the position of the roll door (1) reveals that the roll door is still moving, sending (128) the second instruction to stop the driving of the drive unit (30).

10. Method according to any of the preceding claims, wherein the inverter (20) is communicatively connected to the control unit (10) via a first communication link (70) and the encoder (40) is communicatively connected to the control unit (10) via a second communication link (75), wherein the sending (102) of the first instruction to the inverter (20) comprises sending the first instruction over the first communication link (70) using a digital communications protocol, the obtaining (104) of the information related to the first speed and first direction of the drive unit (30) from the inverter (20) comprises obtaining the information over the first communication link (70) using the digital communications protocol and/or the obtaining (110) of the information related to a position of the roll door (1) from the encoder (40) comprises obtaining the information over the second communication link (75) using the digital communication protocol.

11. Method according to claim 10, further comprising:
repeatedly triggering sending of test messages on the digital communication protocol between the control unit (10) and the encoder (40) over the first communication link (70) and/or between the control unit (10) and the inverter (20) over the second communication link (75),
when obtaining information that any of the test messages was not received over the first or second communication link (70, 75), sending the second instruction to the inverter (20) to stop the driving of the drive unit (30).

12. Method according to any of the preceding claims, further comprising issuing an alarm in response to the determining (106) that any of the first speed and first direction does not match any of the speed and direction of the first instruction and/or in response to the determining (114) that any of the second speed and second direction does not match any of the speed and direction of the first instruction.

13. A control unit (10) of a roll door control system for controlling opening and closing of a roll door (1), the roll door control system further comprising:
an inverter (20) to be communicatively connected to the control unit (10),
a drive unit (30) for driving the roll door (1) to be opened or closed, the drive unit (30) to be connected to the inverter (20),
an encoder (40) for monitoring a position of the roll door (1), the encoder (40) to be communicatively connected to the control unit (10),
wherein the inverter (20) is arranged for controlling the drive unit (30) based on instructions received from the control unit (10), the control unit (10) comprising processing circuitry (203) and a memory (204), said memory (204) containing instructions executable by said processing circuitry (203), whereby the control unit (10) is operative for performing the method of any of claims 1, or 7-12 when dependent on claim 1.

14. Control unit according to claim 13, further comprising a detection unit (50) for arrangement at the roll door (1) for detecting an object in an opening (4) of the roll door (1), the detection unit (50) to be communicatively connected to the control unit (10), whereby the control unit (10) is operative for performing the method of any of claims 1-12.

15. A computer program (205) comprising instructions, which, when executed by processing circuitry (203) of said control unit (10) according to claim 13, causes the control unit (10) to perform the steps of the method of any of claims 1-12.

## Patentansprüche

1. Verfahren, das durch eine Steuereinheit (10) zum Steuern des Öffnens und Schließens eines Rolltors (1) mit einem Rolltorsteuersystem durchgeführt wird, umfassend:
die Steuereinheit (10);
einen Wechselrichter (20), der kommunikativ mit der Steuereinheit (10) verbunden ist,
eine Antriebseinheit (30), die an dem Rolltor (1) zum Antreiben des Rolltors (1) zum Öffnen oder Schließen angeordnet ist, wobei die Antriebseinheit (30) mit dem Wechselrichter (20) verbunden ist,
einen Encoder (40) zum Überwachen einer Position des Rolltors (1), wobei der Encoder (40) kommunikativ mit der Steuereinheit (10) verbunden ist,
wobei der Wechselrichter (20) zum Steuern der Antriebseinheit (30) basierend auf von der Steuereinheit (10) empfangenen Anweisungen ausgelegt ist,
wobei das Verfahren umfasst:
basierend auf einem Befehl zum Öffnen oder Schließen des Rolltors (1), Senden (102) einer ersten Anweisung an den Wechselrichter (20), wobei die erste Anweisung eine Geschwindigkeit und Richtung angibt, in der die Antriebseinheit (30) anzutreiben ist;
Erhalten (104), von dem Wechselrichter (20), von Informationen in Bezug auf eine erste Geschwindigkeit und erste Richtung der Antriebseinheit (30);
Bestimmen (106), aus den Informationen in Bezug auf die erste Geschwindigkeit und erste Richtung, ob die erste Geschwindigkeit und erste Richtung mit der Geschwindigkeit und Richtung der ersten Anweisung übereinstimmen,
Erhalten (110), von dem Encoder (40) und wiederholt über die Zeit, von Informationen in Bezug auf eine Position des Rolltors (1),
Bestimmen (112) einer zweiten Geschwindigkeit und zweiten Richtung der Antriebseinheit (30) basierend auf den Informationen in Bezug auf die Position des Rolltors (1), die wiederholt im Zeitverlauf empfangen werden,
Bestimmen (114), ob die zweite Geschwindigkeit und zweite Richtung mit der Geschwindigkeit und Richtung der ersten Anweisung übereinstimmen, und
wenn eine beliebige der ersten Geschwindigkeit und zweiten Geschwindigkeit nicht mit der Geschwindigkeit der ersten Anweisung übereinstimmt oder wenn eine beliebige der ersten Richtung und zweiten Richtung nicht mit der Richtung der ersten Anweisung übereinstimmt, Senden (108, 116) einer zweiten Anweisung an den Wechselrichter (20), um das Antreiben der Antriebseinheit (30) zu stoppen.

2. Verfahren nach Anspruch 1, wobei das System ferner eine Erfassungseinheit (50) umfasst, die an dem Rolltor (1) angeordnet ist zum Erfassen eines Objekts in einer Öffnung (4) des Rolltors (1), wobei die Erfassungseinheit kommunikativ mit der Steuereinheit (10) verbunden ist, wobei das Verfahren ferner umfasst:
wenn die Erfassungseinheit (50) erfasst, dass sich ein Objekt in der Öffnung (4) des Rolltors (1) befindet, und der Befehl das Schließen des Rolltors (1) war, Empfangen (118) von Informationen von der Erfassungseinheit (50), dass ein Objekt in der Öffnung (4) des Rolltors (1) erfasst wird, und
als Reaktion auf die empfangenen Informationen, dass ein Objekt in der Öffnung (4) des Rolltors (1) erfasst wird, Senden (120) der zweiten Anweisung an den Wechselrichter (20), um das Antreiben der Antriebseinheit (30) zu stoppen.

3. Verfahren nach Anspruch 2, wobei die kommunikative Verbindung zwischen der Erfassungseinheit (50) und der Steuereinheit (10) ein erstes dediziertes Kabel (60) umfasst, und wobei das Empfangen (118) der Informationen von der Erfassungseinheit (50), dass ein Objekt in der Öffnung (4) des Rolltors (1) erfasst wird, ferner das Empfangen der Informationen über das erste dedizierte Kabel (60) umfasst.

4. Verfahren nach Anspruch 2 oder 3, ferner umfassend, nach dem Empfangen (118) von Informationen von der Erfassungseinheit (50), dass ein Objekt in der Öffnung (4) des Rolltors (1) erfasst wird, und nach dem Senden (120) der zweiten Anweisung an den Wechselrichter (20), um das Antreiben der Antriebseinheit (30) zu stoppen, Senden (121) einer Anweisung an den Wechselrichter (20), das Rolltor (1) zu öffnen.

5. Verfahren nach einem der Ansprüche 2-4, ferner umfassend, wenn der Befehl das Schließen des Rolltors (1) ist, und als Reaktion auf den Befehl zum Schließen des Rolltors (1), Erhalten (101) von Funktionsinformationen von der Erfassungseinheit (50), die offenbaren, ob die Erfassungseinheit (50) korrekt funktioniert, und wobei die erste Anweisung an den Wechselrichter (20), die eine Geschwindigkeit und Richtung angibt, in der der Wechselrichter (20) die Antriebseinheit (30) antreiben soll, nur gesendet (102) wird, wenn die erhaltenen (101) Funktionsinformationen offenbart haben, dass die Erfassungseinheit (50) korrekt funktioniert.

6. Verfahren nach einem der Ansprüche 2-5, ferner umfassend Ausgeben eines Alarms als Reaktion auf das Empfangen (118) von Informationen, dass ein Objekt in der Öffnung (4) des Rolltors (1) erfasst wird.

7. Verfahren nach einem der vorhergehenden Ansprüche, wobei die kommunikative Verbindung zwischen der Steuereinheit (10) und dem Wechselrichter (20) ein zweites dediziertes Kabel (65) umfasst, und wobei das Senden (108, 116, 120) der zweiten Anweisung an den Wechselrichter (20), um das Antreiben der Antriebseinheit (30) zu stoppen, ferner das Senden der zweiten Anweisung über das zweite dedizierte Kabel (65) umfasst.

8. Verfahren nach einem der vorhergehenden Ansprüche, ferner umfassend:
Bestimmen (122), basierend auf den erhaltenen (110) Informationen über die Position des Rolltors (1), dass das Rolltor (1) eine Endposition erreicht hat, und
Senden (124) einer Anweisung an den Wechselrichter (20), um das Antreiben der Antriebseinheit (30) als Reaktion auf das Bestimmen, dass das Rolltor (1) eine Endposition erreicht hat, zu stoppen.

9. Verfahren nach Anspruch 8, ferner umfassend, nach dem Senden (124) der Anweisung an den Wechselrichter (20), das Antreiben der Antriebseinheit (30) als Reaktion auf das Bestimmen, dass das Rolltor (1) eine Endposition erreicht hat, zu stoppen, fortgesetztes Erhalten (126) von Informationen über die Position des Rolltors (1) von dem Encoder (40), und wenn die fortgesetzt erhaltenen Informationen über die Position des Rolltors (1) offenbaren, dass sich das Rolltor noch bewegt, Senden (128) der zweiten Anweisung, um das Antreiben der Antriebseinheit (30) zu stoppen.

10. Verfahren nach einem der vorhergehenden Ansprüche, wobei der Wechselrichter (20) kommunikativ mit der Steuereinheit (10) über eine erste Kommunikationsverbindung (70) verbunden ist und der Encoder (40) kommunikativ mit der Steuereinheit (10) über eine zweite Kommunikationsverbindung (75) verbunden ist, wobei das Senden (102) der ersten Anweisung an den Wechselrichter (20) das Senden der ersten Anweisung über die erste Kommunikationsverbindung (70) unter Verwendung eines digitalen Kommunikationsprotokolls umfasst, das Erhalten (104) der Informationen in Bezug auf die erste Geschwindigkeit und erste Richtung der Antriebseinheit (30) von dem Wechselrichter (20) das Erhalten der Informationen über die erste Kommunikationsverbindung (70) unter Verwendung des digitalen Kommunikationsprotokolls umfasst und/oder das Erhalten (110) der Informationen in Bezug auf eine Position des Rolltors (1) von dem Encoder (40) das Erhalten der Informationen über die zweite Kommunikationsverbindung (75) unter Verwendung des digitalen Kommunikationsprotokolls umfasst.

11. Verfahren nach Anspruch 10, ferner umfassend:
wiederholtes Auslösen des Sendens von Testnachrichten auf dem digitalen Kommunikationsprotokoll zwischen der Steuereinheit (10) und dem Encoder (40) über die erste Kommunikationsverbindung (70) und/oder zwischen der Steuereinheit (10) und dem Wechselrichter (20) über die zweite Kommunikationsverbindung (75),
wenn Informationen erhalten werden, dass eine der Testnachrichten nicht über die erste oder zweite Kommunikationsverbindung (70, 75) empfangen wurde, Senden der zweiten Anweisung an den Wechselrichter (20), um das Antreiben der Antriebseinheit (30) zu stoppen.

12. Verfahren nach einem der vorhergehenden Ansprüche, ferner umfassend Ausgeben eines Alarms als Reaktion auf das Bestimmen (106), dass eine der ersten Geschwindigkeit und ersten Richtung nicht mit der Geschwindigkeit und Richtung der ersten Anweisung übereinstimmt, und/oder als Reaktion auf das Bestimmen (114), dass eine der zweiten Geschwindigkeit und zweiten Richtung nicht mit der Geschwindigkeit und Richtung der ersten Anweisung übereinstimmt.

13. Steuereinheit (10) eines Rolltorsteuersystems zum Steuern des Öffnens und Schließens eines Rolltors (1), wobei das Rolltorsteuersystem ferner umfasst:
einen Wechselrichter (20), der kommunikativ mit der Steuereinheit (10) zu verbinden ist,
eine Antriebseinheit (30) zum Antreiben des Rolltors (1), damit dieses geöffnet oder geschlossen wird, wobei die Antriebseinheit (30) mit dem Wechselrichter (20) zu verbinden ist,
einen Encoder (40) zum Überwachen einer Position des Rolltors (1), wobei der Encoder (40) kommunikativ mit der Steuereinheit (10) zu verbinden ist,
wobei der Wechselrichter (20) zum Steuern der Antriebseinheit (30) basierend auf von der Steuereinheit (10) empfangenen Anweisungen ausgelegt ist, wobei die Steuereinheit (10) eine Verarbeitungsschaltung (203) und einen Speicher (204) umfasst, wobei der Speicher (204) durch die Verarbeitungsschaltung (203) ausführbare Anweisungen enthält, wodurch die Steuereinheit (10) zum Durchführen des Verfahrens nach Anspruch 1 oder 7-12, wenn abhängig von Anspruch 1, betreibbar ist.

14. Steuereinheit nach Anspruch 13, ferner umfassend eine Erfassungseinheit (50) zur Anordnung an dem Rolltor (1) zum Erfassen eines Objekts in einer Öffnung (4) des Rolltors (1), wobei die Erfassungseinheit (50) kommunikativ mit der Steuereinheit (10) zu verbinden ist, wodurch die Steuereinheit (10) zum Durchführen des Verfahrens nach einem der Ansprüche 1-12 betreibbar ist.

15. Computerprogramm (205), umfassend Anweisungen, die, wenn sie durch eine Verarbeitungsschaltung (203) der Steuereinheit (10) nach Anspruch 13 ausgeführt werden, die Steuereinheit (10) veranlassen, die Schritte des Verfahrens nach einem der Ansprüche 1-12 durchzuführen.

## Revendications

1. Procédé réalisé par une unité de commande (10) pour commander l'ouverture et la fermeture d'une porte à enroulement (1) avec un système de commande de porte à enroulement comprenant :
l'unité de commande (10) ;
un inverseur (20) connecté en communication à l'unité de commande (10),
une unité d'entraînement (30) agencée au niveau de la porte à enroulement (1) pour entraîner la porte à enroulement (1) pour l'ouverture ou la fermeture, l'unité d'entraînement (30) étant connectée à l'inverseur (20), un encodeur (40) pour surveiller une position de la porte à enroulement (1), l'encodeur (40) étant connecté en communication à l'unité de commande (10),
dans lequel l'inverseur (20) est agencé pour commander l'unité d'entraînement (30) sur la base d'instructions reçues en provenance de l'unité de commande (10),
le procédé comprenant :
sur la base d'un ordre d'ouvrir ou de fermer la porte à enroulement (1), l'envoi (102) d'une première instruction à l'inverseur (20), la première instruction indiquant une vitesse et une direction selon lesquelles l'unité d'entraînement (30) doit être entraînée ;
l'obtention (104), en provenance de l'inverseur (20), d'informations connexes à une première vitesse et à une première direction de l'unité d'entraînement (30) ;
la détermination (106), à partir des informations connexes à la première vitesse et à la première direction, du fait que la première vitesse et la première direction correspondent, ou ne correspondent pas, à la vitesse et à la direction de la première instruction,
l'obtention (110), en provenance de l'encodeur (40) et de façon répétée au fil du temps, d'informations connexes à une position de la porte à enroulement (1),
la détermination (112) d'une seconde vitesse et d'une seconde direction de l'unité d'entraînement (30) sur la base des informations connexes à la position de la porte à enroulement (1) reçues de façon répétée au fil du temps,
la détermination (114) du fait que la seconde vitesse et la seconde direction correspondent, ou ne correspondent pas, à la vitesse et à la direction de la première instruction, et
lorsque l'une quelconque de la première vitesse et de la seconde vitesse ne correspond pas à la vitesse de la première instruction ou lorsque l'une quelconque de la première direction et de la seconde direction ne correspond pas à la direction de la première instruction, l'envoi (108, 116) d'une seconde instruction à l'inverseur (20) d'arrêter l'entraînement de l'unité d'entraînement (30).

2. Procédé selon la revendication 1, dans lequel le système comprend en outre une unité de détection (50) agencée au niveau de la porte à enroulement (1) pour détecter un objet dans une ouverture (4) de la porte à enroulement (1), l'unité de détection étant connectée en communication à l'unité de commande (10), le procédé comprend en outre :
lorsque l'unité de détection (50) détecte qu'un objet est dans l'ouverture (4) de la porte à enroulement (1), et l'ordre a été de fermer la porte à enroulement (1), la réception (118), en provenance de l'unité de détection (50), d'informations signalant qu'un objet est détecté dans l'ouverture (4) de la porte à enroulement (1), et
en réponse aux informations reçues signalant qu'un objet est détecté dans l'ouverture (4) de la porte à enroulement (1), l'envoi (120) de la seconde instruction à l'inverseur (20) d'arrêter l'entraînement de l'unité d'entraînement (30).

3. Procédé selon la revendication 2, dans lequel la connexion de communication entre l'unité de détection (50) et l'unité de commande (10) comprend un premier câble réservé (60), et dans lequel la réception (118) des informations en provenance de l'unité de détection (50) signalant qu'un objet est détecté dans l'ouverture (4) de la porte à enroulement (1) comprend en outre la réception des informations par le biais du premier câble réservé (60).

4. Procédé selon la revendication 2 ou 3, comprenant en outre, après la réception (118) d'informations en provenance de l'unité de détection (50) signalant qu'un objet est détecté dans l'ouverture (4) de la porte à enroulement (1) et après l'envoi (120) de la seconde instruction à l'inverseur (20) d'arrêter l'entraînement de l'unité d'entraînement (30), l'envoi (121) d'une instruction à l'inverseur (20) d'ouvrir la porte à enroulement (1).

5. Procédé selon de quelconques revendications 2 à 4, comprenant en outre, lorsque l'ordre est de fermer la porte à enroulement (1), et en réponse à l'ordre de fermer la porte à enroulement (1), l'obtention (101) d'informations de fonctionnement en provenance de l'unité de détection (50) révélant le fait que l'unité de détection (50) est, ou n'est pas, en fonctionnement correct, et dans lequel la première instruction à l'inverseur (20) indiquant une vitesse et une direction selon lesquelles l'inverseur (20) doit entraîner l'unité d'entraînement (30) est seulement envoyée (102) lorsque les informations de fonctionnement obtenues (101) ont révélé que l'unité de détection (50) est en fonctionnement correct.

6. Procédé selon quelconques des revendications précédentes 2 à 5, comprenant en outre l'émission d'une alarme en réponse à la réception (118) d'informations signalant qu'un objet est détecté dans l'ouverture (4) de la porte à enroulement (1).

7. Procédé selon de quelconques des revendications précédentes, dans lequel la connexion de communication entre l'unité de commande (10) et l'inverseur (20) comprend un second câble réservé (65), et dans lequel l'envoi (108, 116, 120) de la seconde instruction à l'inverseur (20) d'arrêter l'entraînement de l'unité d'entraînement (30) comprend en outre l'envoi de la seconde instruction par le biais du second câble réservé (65).

8. Procédé selon de quelconques des revendications précédentes, comprenant en outre :
la détermination (122), sur la base des informations obtenues (110) sur la position de la porte à enroulement (1), que la porte à enroulement (1) a atteint une position de fin, et
l'envoi (124) d'une instruction à l'inverseur (20) d'arrêter l'entraînement de l'unité d'entraînement (30) en réponse à la détermination que la porte à enroulement (1) a atteint une position de fin.

9. Procédé selon la revendication 8, comprenant en outre, après l'envoi (124) de l'instruction à l'inverseur (20) d'arrêter l'entraînement de l'unité d'entraînement (30) en réponse à la détermination que la porte à enroulement (1) a atteint une position de fin, la continuation de l'obtention (126) d'informations sur la position de la porte à enroulement (1) en provenance de l'encodeur (40), et lorsque les informations obtenues de façon continuée sur la position de la porte à enroulement (1) révèlent que la porte à enroulement est toujours en mouvement, l'envoi (128) de la seconde instruction d'arrêter l'entraînement de l'unité d'entraînement (30).

10. Procédé selon de quelconques des revendications précédentes, dans lequel l'inverseur (20) est connecté en communication à l'unité de commande (10) par l'intermédiaire d'une première liaison de communication (70) et l'encodeur (40) est connecté en communication à l'unité de commande (10) par l'intermédiaire d'une seconde liaison de communication (75), dans lequel l'envoi (102) de la première instruction à l'inverseur (20) comprend l'envoi de la première instruction par le biais de la première liaison de communication (70) en utilisant un protocole de communication numérique, l'obtention (104) des informations connexes à la première vitesse et à la première direction de l'unité d'entraînement (30) en provenance de l'inverseur (20) comprend l'obtention des informations par le biais de la première liaison de communication (70) en utilisant le protocole de communication numérique et/ou l'obtention (110) des informations connexes à une position de la porte à enroulement (1) en provenance de l'encodeur (40) comprend l'obtention des informations par le biais de la seconde liaison de communication (75) en utilisant le protocole de communication numérique.

11. Procédé selon la revendication 10, comprenant en outre :
le déclenchement répété de l'envoi de messages d'essai sur le protocole de communication numérique entre l'unité de commande (10) et l'encodeur (40) par le biais de la première liaison de communication (70) et/ou entre l'unité de commande (10) et l'inverseur (20) par le biais de la seconde liaison de communication (75),
lorsque l'obtention d'informations signalant qu'un quelconque des messages d'essai n'a pas été reçu par le biais de la première ou de la seconde liaison de communication (70, 75), l'envoi de la seconde instruction à l'inverseur (20) d'arrêter l'entraînement de l'unité d'entraînement (30).

12. Procédé selon de quelconques des revendications précédentes, comprenant en outre l'émission d'une alarme en réponse à la détermination (106) qu'une quelconque de la première vitesse et de la première direction ne correspond à aucune de la vitesse et de la direction de la première instruction et/ou en réponse à la détermination (114) qu'une quelconque de la seconde vitesse et de la seconde direction ne correspond aucune de la vitesse et de la direction de la première instruction.

13. Unité de commande (10) d'un système de commande de porte à enroulement pour commander l'ouverture et la fermeture d'une porte à enroulement (1), le système de commande de porte à enroulement comprenant en outre :
un inverseur (20) devant être connecté en communication à l'unité de commande (10),
une unité d'entraînement (30) pour entraîner la porte à enroulement (1) pour qu'elle soit ouverte ou fermée, l'unité d'entraînement (30) devant être connectée à l'inverseur (20),
un encodeur (40) pour surveiller une position de la porte à enroulement (1), l'encodeur (40) devant être connecté en communication à l'unité de commande (10),
dans laquelle l'inverseur (20) est agencé pour commander l'unité d'entraînement (30) sur la base d'instructions reçues en provenance de l'unité de commande (10), l'unité de commande (10) comprenant une circuiterie de traitement (203) et une mémoire (204), ladite mémoire (204) contenant des instructions exécutables par ladite circuiterie de traitement (203), moyennant quoi l'unité de commande (10) est opérationnelle pour réaliser le procédé de quelconques des revendications précédentes 1, ou 7 à 12 lorsqu'elles dépendent de la revendication 1.

14. Unité de commande selon la revendication 13, comprenant en outre une unité de détection (50) destinée à être agencée au niveau de la porte à enroulement (1) pour détecter un objet dans une ouverture (4) de la porte à enroulement (1), l'unité de détection (50) devant être connectée en communication à l'unité de commande (10), moyennant quoi l'unité de commande (10) est opérationnelle pour réaliser le procédé de quelconques des revendications précédentes 1 à 12.

15. Programme d'ordinateur (205), comprenant des instructions, qui, lorsqu'elles sont exécutées par la circuiterie de traitement (203) de ladite unité de commande (10) selon la revendication 13, amènent l'unité de commande (10) à réaliser les étapes du procédé de quelconques des revendications précédentes 1 à 12.
